# EUROPÄISCHE PATENTSCHRIFT

(11) **EP 1 593 001 B1**
(45) Veröffentlichungstag und Bekanntmachung des Hinweises auf die Patenterteilung: **06.06.2012**
(21) Anmeldenummer: 04709980.9
(22) Anmeldetag: 11.02.2004
(51) Int. Cl.: G03B 7/091, H04N 5/232, H04N 5/235, G03B 13/36, G03B 13/30, G03B 7/28

(54) **Einstellung eines Bildaufnehmers mit dynamischen Messfeldern**
Adjustment of an image recorder with dynamic measuring fields
Réglage d'un capteur d'image à l'aide de champs de mesure dynamiques

(30) Priorität: 12.02.2003 DE 10305851
(43) Veröffentlichungstag der Anmeldung: 09.11.2005
(73) Patentinhaber: Fraunhofer-Gesellschaft zur Förderung der angewandten Forschung e.V., 80686 München (DE)
(72) Erfinder: KUEBLBECK, Christian, 91052 Erlangen (DE); FROEBA, Bernhard, 96361 Buchbach (DE)
(74) Vertreter: Leonhard, Frank Reimund
(86) Internationale Anmeldenummer: PCT/DE2004/000246
(87) Internationale Veröffentlichungsnummer: WO 2004/072725

(56) Entgegenhaltungen:
- DE-C2- 10 043 460
- US-A- 4 929 824
- US-A- 4 978 990
- US-A1- 2002 021 897
- US-A1- 2003 021 600
- US-B1- 6 438 324

## Beschreibung

Die Erfindung befasst sich mit einem Verfahren bzw. einer Vorrichtung nach Anspruch 1 bzw. 14. Dabei angesprochen wird der Bildaufnehmer zur Aufzeichnung eines Objektes bzw. der Bilddaten des Objektes. Insoweit ist das Objekt so zu verstehen, dass das Objektabbild die Aufzeichnung darstellt. In der folgenden Beschreibung wird oft auch vom Objekt gesprochen.

Bei Photokameras existieren Systeme zur automatischen Einstellung der Schärfe (Autofokus genannt). Hierbei wird ein Bildbereich, in der Regel aus der Bildmitte, genommen, der von der Kamera vorab festgelegt ist. Auf diesen Bildbereich werden verschiedene Verfahren angewendet. Diese Verfahren können die Entfernungsmessung umfassen, wenn ein Autofokus gewünscht ist. Diese Verfahren können aber auch eine automatische Einstellung von Blende und/oder Belichtungszeit betreffen (sogenannte Programmautomatik). Hierzu wird die Helligkeit des beschriebenen Bildbereiches genommen und eine Auswertung und Einstellung vorgenommen. Alternativ zu der festgelegten Mittenmessung kann auch eine Spot-Messung stattfinden, wenn ein kleiner Ausschnitt im Zentrum der Objektabbildung festgelegt ist, aus der die Belichtungsinformation zur Einstellung der Kamera abgeleitet wird. Es sind auch mehrere Stellen anwendbar, die mit der genannten Spot-Messung kombiniert werden können, dabei sowohl gewichtet wie auch ungewichtet.

Aus der US 6,438,324 (Kindaichi) ist ein Abstands-Meßsystem für eine Mehrfach-Autofokus-Kamera bekannt. Die Schrift befasst sich mit der Fokussierung (vgl. dort Spalte 1, Zeilen 14 bis 21 und Spalte 2, Zeilen 34 bis 46). Es wird versucht, die Fokussierung zeitlich kürzer zu gestalten und dennoch genau zu sein. Dazu wird der Kamera eine bestimmte Betriebsweise vorgegeben, entweder der Normalbetrieb oder der Spotbetrieb, wobei im Spotbetrieb das Hauptobjekt (the main subject) nicht gesucht wird und die Steuerung zurückgesteuert wird respektive beendet wird. In einer beispielsweise mit Flutlicht beleuchteten Szene (dem "main subject") werden bestimmte, helle Signale von einem Mikroprozessor ausgewertet, vgl. dort Spalte 10, Zeilen 45 bis Spalte 11, Zeile 53. Ein bestimmtes Subjekt wird durch eine Korrekturfunktion ermittelt, vgl. dort Abstract, letztes Drittel.

Auch mit einer Steuerung, aber mit einer Belichtungssteuerung (exposure control) einer Kamera befasst sich die US 4,978,990 (Yamasaki et al.). Dabei findet ein neuronales Netzwerk Anwendung, das einen wesentlichen Abschnitt des Objekts von einem Helligkeitsmuster ableitet und dies als Sollwert für einen Helligkeitswert verwendet, vgl. dort Abstract, Mitte und Spalte 2, Zeilen 1 bis 37.

Nicht immer ist sichergestellt, dass der interessierende Bereich eines Bildes in der Mitte ist. Nicht immer ist sichergestellt, dass die Spot-Messung auch die zutreffende Belichtung ergibt. Eine mittenbetonte Messung ist meist keine ausreichende Abhilfe, da hierbei Licht- und Farbeinflüsse auf die Einstellung des Bildaufnehmers Einfluss nehmen, die vom Aufzeichnenden (dem Benutzer des Bildaufzeichnungsgerätes) gerade nicht gewünscht werden.

Die **technische Problemstellung** liegt darin, eine verbesserte (oder sich besser auf den Anwendungsfall automatisch einstellende) Aufzeichnungseinrichtung zur Verfügung zu stellen.

Erreicht wird das mit der Lösung nach Anspruch 1 oder 14. Die Erfindung erweitert die Möglichkeiten, die sich mit einem Bildaufnehmer bieten. An Stelle von statischen Punkten oder Feldern wird die Messung von dynamischen Feldern vorgenommen. Die Dynamik ist nicht von der Kamera vorgegeben, sondern von dem Bild (Anspruch 14). Brennweite, Blende oder Belichtung oder Fokuseinstellung werden dynamisch so gesteuert, dass das Bild selbst festlegt, welche Position oder welcher Bereich des Bildes (der Objektausschnitt) zur Steuerung der Kamera verwendet wird. Die Einstellung der Kamera ist zumindest eine solche, die die Aufzeichnung des Objektes beeinflusst. Betont werden Fokussierung und Blende und Belichtungszeit angesprochen, aber auch die Kombination aus Fokussierung und zumindest einer der Einstellungen Blende/Belichtung (Anspruch 2, 3 und 4).

Die auszuwertenden Bildausschnitte (Felder oder Punkte) werden bestimmt, indem vor dem Auslösen des Bildaufzeichners, oder vor dem Beginn der Aufzeichnung bei einem Videoaufzeichnungsgerät, vom Benutzer eine bestimmte Art eines Objekttyps vorgegeben wird (Anspruch 1).

Solche Arten von Objekttypen können beispielsweise ein Gesicht sein (Anspruch 10, 11). Dieses soll scharf dargestellt werden und/oder gut ausgeleuchtet sein, bezogen auf das Objektabbild.

Vor der Bestimmung der Parameter zur Einstellung des Aufzeichnungsbildes liegt also die Vorgabe eines Objekttyps (durch den Benutzer) und die automatische Ermittlung des Systems, die Position in dem Objektabbild zu ermitteln, die dem Objekttyp entspricht. Dies ist zumindest ein Objektausschnitt (Anspruch 7).

Zusätzlich zur Position kann auch die Größe ermittelt werden, zumindest im Wesentlichen (Anspruch 11).

Es werden also mit Hilfe eines Detektionsalgorithmus Typen des festgelegten Objekttyps im Bild gesucht und damit die Auswahl der Messpunkte oder Messfelder, die zur Parameterbestimmung benutzt werden, beeinflusst (Anspruch 12).

Mehrere (gleiche) Objekttypen dürfen auch im Objektbild vorhanden sein (Anspruch 7); es ergeben sich dann Positionsdaten für jeden Ausschnitt, die als jeweilige Gruppe den jeweiligen Ausschnitt im (gesamten) Objektabbild lokalisieren bzw. so vom Ort her festgelegt werden (Anspruch 11).

Bei mehreren Bildausschnitten zum Objekttyp (Anspruch 7) kann die Tiefenschärfe optimiert werden (Anspruch 9).

Eine unterstützende Mit-Steuerung kann von festgelegten, nicht beweglichen (kleineren) Feldern erfolgen (Anspruch 13). Sie sind im Objektabbild (auf dem Bildsensor in dem Gerät) fest vorgegeben.

Ausführungs**beispiele** ergänzen und erläutern die Erfindung.
- **Figur 1**: ist ein Blockschaltbild eines ersten Ausführungsbeispiels.
- **Figur 1a**: ist ein Aufzeichnungsgerät 100.
- **Figur 2**: ist ein anschaulich gemachtes Funktionsschaubild nach dem Blockschaltbild der Figur 1, mit einer jeweiligen Darstellung der Arbeitsweise bei einem aufgenommenen Bild 1.
- **Figur 3**: ist ein graphisches Abbild einer Fokuseinstellung nach dem Blockschaltbild der Figur 1.
- **Figur 4**: ist ein graphisches Abbild einer Belichtungseinstellung nach dem Ausführungsbeispiel der Figur 1.

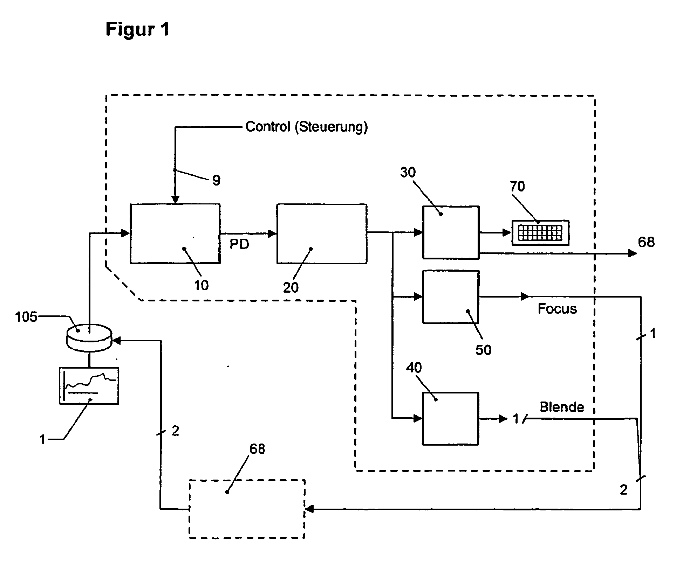

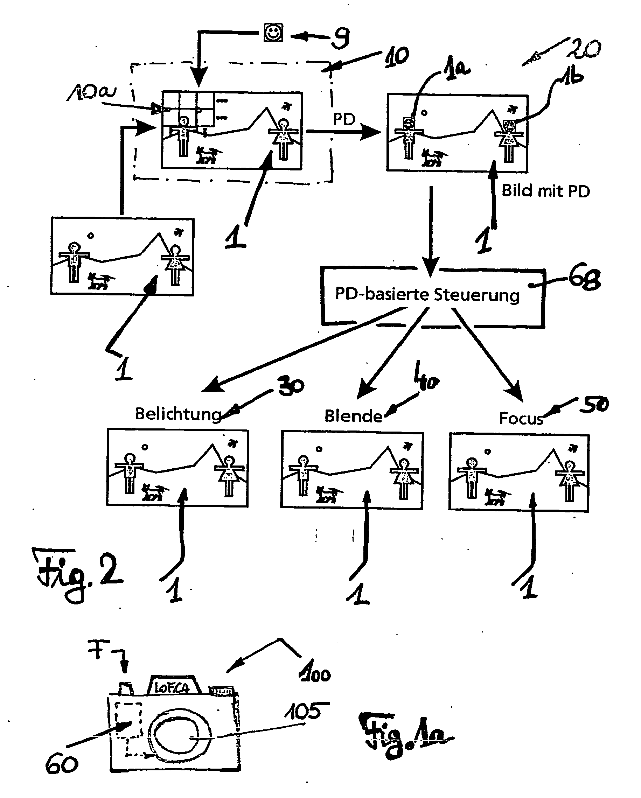

Ausgehend von einem Aufzeichnungsgerät 100 nach der **Figur 1a** soll die Funktionsweise beschrieben werden, mit der das Verfahren zur Beeinflussung der Aufzeichnungseinstellung des Bildaufnehmers 100 arbeitet, zur Aufnahme eines Objektes, das beispielsweise eine Person oder ein technisches Objekt ist, wie eine Schraube oder ein Rad, um einen industriellen Anwendungsbereich zu finden. Das Beispiel einer Kamera 100 ist nicht spezifisch beschränkend, vielmehr können auch andere Bildaufnehmer Anwendung finden, so eine - nicht dargestellte - Videokamera mit einer Abfolge von Bildern oder ein industrielles Aufzeichnungsgerät, zur Überwachung der Fertigung oder Bearbeitung eines der vorgenannten technischen Objekte. Beschrieben werden soll die Aufzeichnung eines Einzelbildes, ebenso kann die Aufzeichnung dieses Einzelbildes auch auf eine Bildfolge übertragen werden, wobei eine Fokuseinstellung, eine Belichtungseinstellung, eine Blendeneinstellung oder eine beliebige Kombination dieser Einstellung dann auf jedes der aufeinanderfolgenden Bilder anzuwenden ist.

Mit einer Aufzeichnungslinse 105 arbeitet die Fotokamera 100 nach Figur 1a. In einem Bereich 60 dieser Kamera ist die Steuerungstechnik zur Einstellung der Aufzeichnung vorgesehen. Dazu können entsprechende motorische Antriebe vorgesehen sein, um die Blendeneinstellung oder die Fokuseinstellung der Linse 105 vorzunehmen. Die (elektronische) Einstellung der Belichtungszeit kann über eine Elektronik 68 gesteuert werden. Die Elektronik kann den Shutter (als irisbiende oder ais Lamellenblende) in seinem Bewegungsablauf und damit seiner Öffnungszeit (Belichtungszeit) steuern (mechanischer Verschluß).

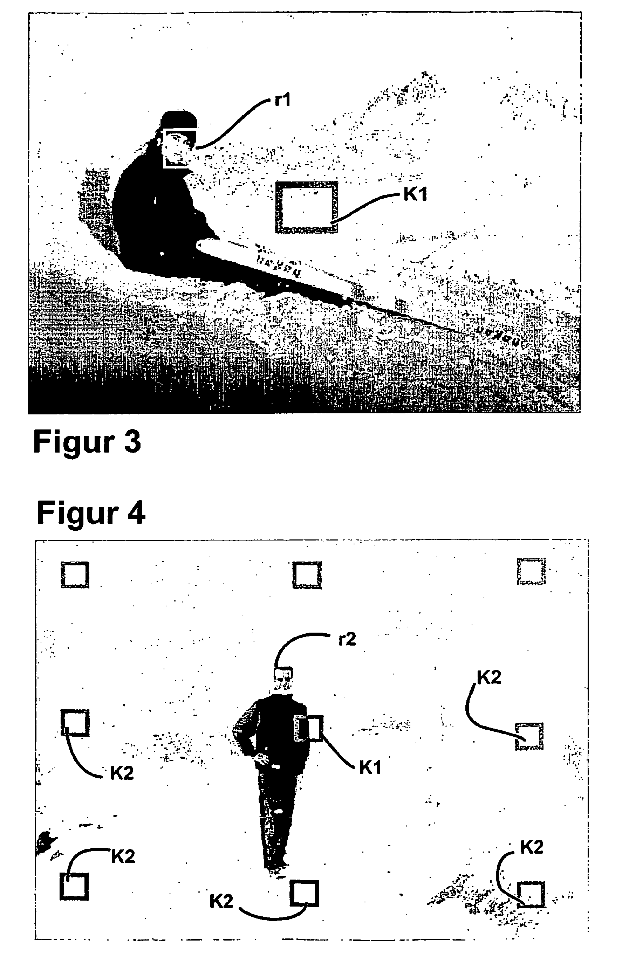

Eine Aufzeichnung eines Objektes findet statt, wobei das Objekt beispielsweise das Bild 1 nach **Figur 2** ist. Andere Objekte sind in Figur 3 und Figur 4 als Personen vor einem schwierigen (vorwiegend hellen) Hintergrund gezeigt. Die Aufzeichnung des Objektes ergibt ein Objektabbild oder ein "Bild des Objektes", von dem nach der Aufzeichnung oder bei der Aufzeichnung auch oft als "Objekt" gesprochen wird, hier aber in der bildlichen Wiedergabe, welche dem Originalobjekt pixelorientiert entspricht. Die Aufzeichnung des Objektes wird mit zumindest einer verändernden Einstellung, wie Blende, Belichtungszeit oder Fokussierung vorgenommen, wobei ein Objektausschnitt im Objektabbild die zumindest eine Einstellung steuert.

Zur Steuerung bzw. zur Einflussnahme auf die Art und Weise der Aufzeichnung wird in dem aufzuzeichnenden Objektbild 1 zunächst ein Objektausschnitt lokalisiert. Diese Lokalisierung ist vom Typ her vorgegeben, wozu über eine Benutzerschnittstelle 9 ein Objekttyp eingestellt wird. Beispielsweise kann der Objekttyp ein Gesicht sein, das durch Merkmale oder Kantenlinien definiert wird, wie über ein Muster oder Modell nach DE-C 100 43 460 (Fraunhofer-Gesellschaft), vgl. dort die Auswertung der Kanteninformation, die Modellgenerierung nach der dortigen Figur 8 und die Art und Weise der Lokalisierung eines Gesichtes gemäß dortigen Figuren 6, 6a und Figur 7, mit jeweils zugehörigen Passagen der Beschreibung, insbesondere Absatz 084 bis 086 in Spalten 13,14. Angesprochen werden dort auch Positionsinformationen und Größeninformationen, vgl. dort Absatz 079, Spalte 12. Diese Absuche des Gesamtbildes 1 mit Blick auf einen bestimmten Objekttyp, symbolisiert das 2x3-Raster 10a in Figur 2. Dieses Raster 10a ist symbolisch im Bild eingezeichnet, wird funktionell aber von einer Funktionseinheit 10 vorgenommen, welcher der Objekttyp 9 vorgegeben wird. Ausgangswert dieser Funktionseinheit ist eine Lokalisierungsinformation PD (Position Data), welche das gesuchte Objekt im Bild 1 lokalisiert, beispielsweise so, wie es symbolisch in Figur 2 mit 1a und 1 b eingezeichnet ist. Es können dabei im Bild auch mehrere Flächenstücke lokalisiert werden, in denen ein Objekttyp erkannt worden ist, welcher vom Benutzer über die Schnittstelle 9 vorgegeben wurde.

Die Positionsdaten PD werden in einer Einrichtung 20 dazu verwendet, diese Bildausschnitte als Objektausschnitte festzulegen und datentechnisch zu kennzeichnen. Symbolisch sind in den zugehörigen anschaulicheren **Figuren 3 und 4** Rahmen r1, r2 eingezeichnet, in denen ein Gesicht erkannt wurde, und welche Rahmen durch Lage und Größe von der Absuche 10 erkannt und mit der Festlegungseinrichtung 20 im Bild definiert festgelegt sind. Der so lokalisierte und festgelegte Objektausschnitt ist vom Typ her vorgegeben, wurde von der Bildauswertung (Absuche 10) im Objektabbild 1 lokalisiert, und wird zur Steuerung der Linseneinstellung oder der Zeiteinstellung des Bildaufnehmers 100 eingesetzt.

Aus dem Objektausschnitt wird die Bildinformation verwendet, die in ihm gelegen ist, zumindest ein wesentlicher Anteil davon. Aus der Bildinformation kann entweder ein Helligkeitswert ermittelt werden (als Mittelwert), es können Kontrastinformationen ausgewertet werden oder es kann eine Fokuseinstellung auf diesen Bereich 1 a oder 1 b, gekennzeichnet durch Rahmen vergleichbar den Rahmen r1,r2 nach Figuren 3,4, ausgerichtet werden. Mit dieser Bildinformation (im allgemeinen Sinn) aus dem zumindest einen festgelegten Objektausschnitt wird die Einstellung über eine Steuereinrichtung 30,40 oder 50 nach **Figur 1** verändert, bezogen auf die Kameralinse 105 oder die Brennweiteneinstellung oder Fokuseinstellung.

Die zugehörigen Steuereinrichtungen als PD-basierte Steuerung 68 finden sich in den Einzelkomponenten 30,40,50 wieder, die entweder jeweils eigenständig, oder in einer beliebigen Kombination auf die Kameraeinstellung Auswirkungen haben können.

Das anschauliche Blockschaltbild nach Figur 2 verdeutlicht die Belichtungseinstellung 30, die Blendeneinstellung 40 und die Fokuseinstellung 50, jeweils mit Bezug auf das gerade im Sucher befindliche Objektbild 1, das entsprechend der PD-Information in seinen Aufnahmeparametem verändert wird.

Es kann mit nur einem Objektausschnitt gearbeitet werden. Es können aber auch mehrere Objektausschnitte herangezogen werden, die gemeinsam zur Steuerung herangezogen werden. Beispielsweise kann der Objektausschnitt 1a und der Objektausschnitt 1b, die nicht in der gleichen Distanz von dem Bildaufnehmer plaziert sind, eine Tiefenschärfe durch Wahl einer entsprechenden Blendeneinstellung ansteuern, mit der beide Objektausschnitte noch hinreichend scharf im Tiefenschärfenbereich gelegen sind. Dieses ist ein Beispiel für eine Blendeneinstellung 40, die dann eine entsprechend automatisierte Belichtungseinstellung 30,68 nach sich ziehen würde, soweit die Umgebungshelligkeit es erlaubt.

Soll gleichzeitig eine Helligkeitseinstellung erfolgen, kann diese ebenfalls im Bereich der erkannten Objektausschnitte angesiedelt werden, was ganz besonders bei schwierigen Umgebungsbedingungen nach Figur 4 ohne weiteres dem Kamerafachmann ersichtlich ist. Das Gesicht würde völlig unterbelichtet werden, wenn die Kamera mit einer Belichtungseinstellung arbeiten würde, die auf einen Mittelwert der Gesamthelligkeit des gesamten Bildes ausgerichtet ist. Auch eine Mittenhelligkeit, beispielsweise über das mittlere Belichtungsfeld K1 würde hier nicht helfen, weil wiederum eine zu lange Belichtung erfolgen würde.

Die weiteren Belichtungsfelder mit kleinerer Erstreckung, im folgenden K2 genannt und am Bildrand umfänglich verteilt angeordnet, sind ersichtlich ebenso ungeeignet, nachdem Himmel, Schnee und sonstige helle Gegenstände zur Belichtungseinstellung gemessen würden, wohingegen das Belichtungsfeld r2 genau denjenigen Bereich des Bildes herausnimmt, der für die Belichtung im wesentlichen relevant ist.

Gerade bei portablen Kameras oder Videokameras ist eine sich automatisch auf das Objekt einstellende Beeinflussung der beschriebenen Einstellungen vorteilhaft. Das Objekt verlagert sich oft aus der Bildmitte heraus, die besonders bei Figur 3 mit dem zentralen Belichtungs-Messfeld K1 neben der eigentlich interessanten Belichtungsfläche r1 liegen würde.

Die flächigen Messfelder r2,r1 nach Figuren 3,4, die von der Absuche 10 erfaßt werden und von der Festlegungseinrichtung 20 im Bild identifiziert werden, bilden eine adaptive Einstellmöglichkeit, bei der während der Aufzeichnung des Objektes (oder vor der Aufzeichnung) einer der beschriebenen technischen Parameter abhängig vom Objektbild gesteuert wird. Dabei ist der Objektausschnitt, der die Steuerung veranlaßt, von dem Objektbild abhängig und nicht von der Kamera oder dem Bildaufnehmer vorgegeben, wie es die beispielhaft dargelegten Messfelder K1 und K2 symbolisieren.

Bewegt sich die in Figur 4 dargestellte Person ein wenig nach links (Bewegungen nach rechts sind aufgrund der geografischen Umgebung kritisch), bewegt sich auch das Messfeld r2 mit der Person mit. Dadurch wird der Objektausschnitt von dem Objektbild abhängig, insbesondere in seiner Lage (bei einer seitlichen Bewegung) oder in seiner Größe (bei einer Bewegung auf die Kamera zu oder von der ihr weg). Das Gesicht gibt den wesentlichen Anteil des Feldes vor, der zur Steuerung der Kamera verwendet wird. Zumindest einer der beschriebenen technischen Parameter wird durch diesen Objektausschnitt gesteuert, oder zumindest mit beeinflusst, was aussagen soll, dass keine alleinige Beeinflussung erfolgen muß, sondern eine Mitbeeinflussung erfolgen kann. Andere Parameter, so beispielsweise die standardmäßig vorgesehenen Messfelder K1 oder K2 (oder mehrere dieser Messfelder) können ebenfalls unterstützend hinzutreten, um schwierige Bildsituationen zu erfassen, zutreffend zu belichten und zu guten Bildergebnissen kommen zu können.

Zur Auffindung der Objektinformation, bzw. der Positionsdaten PD kann das gesamte Bild 1 abgesucht werden. Dabei wird auch die Information mitgeliefert, wie viele der gesuchten Objekttypen in dem Gesamtbild vorhanden sind. Sind mehrere vorhanden, kann der Benutzer auswählen, welches dieser mehreren Objektausschnitte er verwenden möchte oder aber er lässt mehrere zur Steuerung der Kameraeinstellung zu.

Neben einer Einstellung kann auch eine Anzeige 70 erfolgen, die über die Anzahl der gefundenen Objektausschnitte als bestimmende Messflächen r2,r1 Auskunft gibt, ggf. diejenigen identifiziert, die zur Steuerung verwendet werden, oder anderweitige Steuerungsinformationen liefert, die für den Benutzer bei der Aufzeichnung relevant sein können.

In Figur 3 ist das Foto einer Person vor einem schwierigen Hintergrund zu erkennen. Ist es Wunsch des Benutzers, automatisch die Schärfe immer auf die im Bild vorhandenen Gesichter einzustellen, so wird anstelle einer standardmäßig vorgesehenen Fokussierung auf das Messfeld K1 eine solche Fokussierung 40 mit dem Bereich r1 vorgenommen.

Die Fokussierung erfolgt wesentlich genauer, nachdem die zu fokussierende Person nicht im Zentrum des Bildes liegt, sondern leicht seitlich gegenüber einer mittenbetonten Fokussierung versetzt ist.

Sind mehrere Personen in dem Bild der Figur 3 vorhanden, so kann durch Einstellung einer Tiefenschärfe eine Fokuseinstellung erfolgen, die eine Blendeneinstellung nach sich zieht. Es kann auch eine Kombination aus dem festen Bereich K1 und dem dynamischen Messfeld r1 verwendet werden, bei dem sowohl der übliche (kamerafeste) Bereich zur Fokuseinstellung, wie auch der vom Objekt festgelegte verlagerte Bereich r1 zur Einstellung herangezogen werden.

Hierbei ist nochmals zu erwähnen, dass die Lage des Objekttyps im Bild nicht von der Kamera abhängt, sondern vom Objektbild bzw. vom Objektabbild vorgegeben wird. Bewegt sich die Person quer über das Bild, so bewegt sich auch das Messfeld r1 (oder r2 oder 1a oder 1b) mit der Person mit, obwohl die Kamera selbst in ihrer Ausrichtung, wie auch der übrige Hintergrund unverändert bleiben.

Ein Beispiel einer Belichtungseinstellung ist in Figur 4 skizziert. Normalerweise wird die Helligkeit durch Auswertung mehrerer Bereiche bestimmt, die exemplarisch mit K2 und acht zugehörigen Messfeldem K2 vorgegeben sind. Messfeld K1 kann noch hinzutreten, so dass ein Mittelwert aus neun Belichtungsfeldern zur Helligkeitsbestimmung herangezogen wird.

Ersatzweise oder zusätzlich kann die Helligkeit auch eines Gesichtbereiches herangezogen werden, der mit r2 zuvor bezeichnet wurde. Dieser Gesichtsbereich ist durch die Positionsdaten PD vorgegeben, wurde von der Absuche 10 ermittelt und kann in die Belichtungseinstellung einfließen.

Die Ausleuchtung des Gesichts kann auf diese Weise verbessert werden. Der als schwierig anzusehende helle/weiße Hintergrund tritt in seinem tragenden Effekt auf die Aufnahme zurück.

## Patentansprüche

1. Verfahren zum Beeinflussen der Aufzeichnungseinstellung eines Bildaufnehmers zur Aufzeichnung eines Objekts;
- wobei eine - die Aufzeichnung des Objektes zumindest mit beeinflussende - Einstellung, wie Blende, Belichtungszeit oder Fokussierung (30,40,50), von zumindest einem Objektausschnitt (1a;1b) im Objektabbild dadurch gesteuert wird (60), dass
- ein Objekttyp über eine Benutzerschnittstelle (9) vorgegeben wird, der Objektausschnitt mit dem Objekttyp von einer Bildauswertung (10) im Objektabbild (1) lokalisiert wird (PD) und Lokalisierungsinformation (PD) abgegeben wird;
- mit der abgegebenen Lokalisierungsinformation der Objektausschnitt festgelegt wird (20) und mit Bildinformation aus dem zumindest einen, festgelegten Objektausschnitt (1a,1b) die Einstellung beeinflusst wird.

2. Verfahren nach Anspruch 1, wobei die Einstellung eine Fokuseinstellung (50) ist.

3. Verfahren nach Anspruch 1, wobei die Einstellung eine Blendeneinstellung (40) ist.

4. Verfahren nach Anspruch 1 oder 3, wobei die Einstellung eine Belichtungseinstellung (30) ist.

5. Verfahren nach Anspruch 1, wobei der Bildaufnehmer eine Videokamera oder eine Photokamera ist, insbesondere für den privaten Anwender oder einen industriellen Anwendungsbereich.

6. Verfahren nach vorigem Anspruch 5, wobei die Kamera (100) oder Videokamera portabel ist.

7. Verfahren nach Anspruch 1, wobei mehrere Objektausschnitte im Objektabbild (1) lokalisiert werden, mehrere Lokalisierungsinformationen als jeweilige Gruppe ermittelt werden und aus den Bildinformationen der mehreren Objektausschnitte die Einstellung beeinflusst wird.

8. Verfahren nach Anspruch 1, wobei ein Objektausschnitt (1a,1b) ein flächiges Messfeld ist.

9. Verfahren nach Anspruch 1 oder 7, wobei bei der Detektion mehrerer Objektausschnitte in einem Bild zusätzlich eine Tiefenschärfe mit Hilfe einer Blendeneinstellung so angepasst wird, dass alle Objektausschnitte scharf abgebildet werden.

10. Verfahren nach Anspruch 1, wobei der Objekttyp von einem Benutzer vorgegeben wird, beispielsweise als ein Gesicht oder ein technisches Objekt, wie PKW, Schraube oder Rad.

11. Verfahren nach Anspruch 1, wobei ein Gesicht als Objektausschnitt (r1,r2) im Objektabbild die Lage und Größe des Objektausschnitts vorgibt, mit der die - die Aufzeichnung des Objekts zumindest mitbeeinflussende - Einstellung gesteuert wird (60).

12. Verfahren nach Anspruch 1, wobei im Wesentlichen das gesamte Bild des Objektes (Objektbild) einer Berechnung (20) unterworfen wird, welcher der Typ des Objektes (Objekttyp) vorgegeben ist und die aus der Bildinformation die Objektausschnitte durch Abgabe von Lokalisierungsinformation (PD) findet und zugehörige Daten an eine weitere Schaltung weitergibt (60).

13. Verfahren nach Anspruch 1, wobei zusätzlich zu der Steuerung der Einstellung auch eine weitere Mitsteuerung der gleichen Einstellung durch zumindest einen in der Lage im Objektabbild festgelegten Bildausschnitt (K1,K2) erfolgt.

14. **Bildaufnehmer** zur Aufzeichnung eines Objekts durch bildliche Wiedergabe der Bildinformation des Objektes, mit einer Einrichtung (60,68), arbeitsfähig nach einem Verfahren einer der vorgenannten Ansprüche, mit einer Benutzerschnittstelle (9) und wobei
- mit einer Steuereinrichtung (30,40,50) eine - die Aufzeichnung des Objektes zumindest mit beeinflussende - Einstellung, wie Blende, Belichtungszeit oder Fokussierung von zumindest einem Objektausschnitt (1a;1b) im Objektabbild so steuerbar ist (60), dass
- mit der Benutzerschnittstelle (9) der Objektausschnitt nach einem Typ vorgebbar ist und mit einer Funktionseinheit (10) zur Bildauswertung im Objektabbild (1) lokalisiert wird (PD), zur Abgabe von Lokalisierungsinformation (PD) des Objektausschnitts; und
- mit einer Einrichtung (20), die aus der Lokalisierungsinformation den Objektausschnitt festlegt, um mit Bildinformation aus dem lokalisierten Objektausschnitt (1a,1b) die Einstellung der Aufzeichnung des Objekts zu beeinflussen.

## Claims

1. **Method** for influencing the recording setting of an image recorder for recording an object;
- wherein a setting - at least jointly influencing the recording of the object - such as aperture, exposure time or focussing (30, 40, 50), is controlled (60) by at least one object segment (1a; 1b) in the object picture in that
- an object type is preset via a user interface (9), the object segment with the object type is located (PD) by image evaluation (10) in the object picture (1) and location information (PD) is emitted;
- using the emitted location information, the object segment is fixed (20) and using image information from the at least one, fixed object segment (1a, 1b), the setting is influenced.

2. Method according to claim 1, wherein the setting is a focus setting (50).

3. Method according to claim 1, wherein the setting is an aperture setting (40).

4. Method according to claim 1 or 3, wherein the setting is an exposure setting (30).

5. Method according to claim 1, wherein the image recorder is a video camera or a photographic camera, in particular for the private user or an industrial application.

6. Method according to previous claim 5, wherein the camera (100) or video camera is portable.

7. Method according to claim 1, wherein several object segments are located in the object picture (1), several pieces of location information are ascertained as a particular group and the setting is influenced from the image information of the several object segments.

8. Method according to claim 1, wherein an object segment (1a, 1b) is a two-dimensional measuring field.

9. Method according to claim 1 or 7, wherein during the detection of several object segments in an image, in addition a depth of definition is adapted with the aid of an aperture setting so that all object segments are reproduced in focussed manner.

10. Method according to claim 1, wherein the object type is preset by a user, for example as a face or a technical object, such as car, screw or wheel.

11. Method according to claim 1, wherein a face as an object segment (r1, r2) in the object picture presets the position and size of the object segment, with which the setting - at least jointly influencing the recording of the object - is controlled (60).

12. Method according to claim 1, wherein essentially the entire image of the object (object image) is subjected to a calculation (20), for which the type of object (object type) is preset and which finds the object segments from the image information by emitting location information (PD) and forwards (60) associated data to a further circuit.

13. Method according to claim 1, wherein in addition to control of the setting, further joint control of the same setting is also effected by at least one image segment (K1, K2) fixed in the position in the object picture.

14. **Image recorder** for recording an object by pictorial representation of the image information of the object, having a device (60, 68), operatable according to a method of one of the afore-mentioned claims, having a user interface (9) and wherein
- a setting - at least jointly influencing the recording of the object - such as aperture, exposure time or focussing, can be controlled (60) by at least one object segment (1a; 1b) in the object picture using a control device (30, 40, 50) so that
- using the user interface (9), the object segment can be preset according to a type and using a function unit (10) for image evaluation is located (PD) in the object picture (1) to emit location information (PD) of the object segment; and
- using a device (20) which establishes the object segment from the location information to influence the setting of the recording of the object using image information from the located object segment (1a, 1b).

## Revendications

1. **Procédé** pour influer sur le réglage de paramètres d'enregistrement d'un capteur d'image destiné à enregistrer un objet;
- dans lequel on commande (60) un réglage influant au moins sur l'enregistrement de cet objet, tel que le réglage du diaphragme, du temps d'exposition ou de la mise au point (30, 40, 50) par au moins une découpe d'objet (1a; 1b) formée dans l'image de l'objet, en ce que
- on définit au préalable un type d'objet au moyen d'une interface d'utilisateur (9), on localise (PD) la découpe d'objet (1) à partir du type d'objet dans l'image de l'objet (1) par une évaluation de l'image (10) et on émet une information de position (PD);
- on détermine (20) la découpe d'objet à partir de l'information de position émise et on influe sur le réglage à l'aide de l'information d'image à partir de ladite au moins une découpe d'objet déterminée (1a, 1b).

2. Procédé selon la revendication 1, dans lequel le réglage est un réglage de la mise au point (50).

3. Procédé selon la revendication 1, dans lequel le réglage est un réglage du diaphragme (40).

4. Procédé selon la revendication 1 ou 3, dans lequel le réglage est un réglage de l'exposition (30).

5. Procédé selon la revendication 1, dans lequel le capteur d'image est une caméra vidéo ou une caméra photographique, en particulier destinée à l'utilisateur privé ou à un domaine d'utilisation industriel.

6. Procédé selon la revendication 5, dans lequel la caméra (100) ou la caméra vidéo est portable.

7. Procédé selon la revendication 1, dans lequel on localise plusieurs découpes d'objet dans l'image de l'objet (1), on détermine plusieurs informations de position sous forme de groupes respectifs et on influe sur le réglage à partir des informations d'image des multiples découpes d'objet.

8. Procédé selon la revendication 1, dans lequel une découpe d'objet (1a, 1b) est un champ de mesure plat.

9. Procédé selon la revendication 1 ou 7, dans lequel, lors de la détection de plusieurs découpes d'objet dans une image, on adapte en outre une profondeur de champ à l'aide d'un réglage du diaphragme, de telle manière que toutes les découpes d'objet soient reproduites nettement.

10. Procédé selon la revendication 1, dans lequel un utilisateur définit au préalable un type d'objet, par exemple un visage ou un objet technique, comme une voiture, une vis ou une roue.

11. Procédé selon la revendication 1, dans lequel un visage comme découpe d'objet (r1, r2) dans l'image de l'objet prédéfinit la position et la grandeur de la découpe d'objet, à l'aide desquelles on commande (60) le réglage influant également au moins sur l'enregistrement de l'objet.

12. Procédé selon la revendication 1, dans lequel on soumet essentiellement l'image entière de l'objet (image de l'objet) à un calcul (20), auquel le type de l'objet (type d'objet) est prédéfini et qui trouve à partir de l'information d'image les découpes d'objet par émission d'information de position (PD) et retransmet des données correspondantes à un autre circuit (60).

13. Procédé selon la revendication 1, dans lequel, en plus de la commande du réglage, on effectue aussi une commande supplémentaire du même réglage à l'aide d'au moins une découpe d'image (K1, K2) définie en position dans l'image de l'objet.

14. **Capteur d'image** pour l'enregistrement d'un objet par la reproduction graphique de l'information d'image de l'objet, à l'aide d'un dispositif (60, 68), capable d'opérer suivant un procédé selon l'une quelconque des revendications précitées, avec une interface d'utilisateur (9) et dans lequel
- avec un dispositif de commande (30, 40, 50), un réglage - influant au moins sur l'enregistrement de l'objet - comme un réglage du diaphragme, du temps d'exposition ou de la mise au point, peut être commandé (60) par au moins une découpe d'objet (1a; 1b) formée dans l'image de l'objet, de telle manière que
- avec l'interface d'utilisateur (9), la découpe d'objet puisse être prédéfinie selon un type et être localisée dans l'image d'objet (1) à l'aide d'une unité de fonction (10) pour l'évaluation de l'image, afin d'émettre une information de position (PD) de la découpe d'objet; et
- avec un dispositif (20), qui détermine la découpe d'objet à partir de l'information de position, afin d'influer sur le réglage de l'enregistrement de l'objet à l'aide de l'information d'image à partir de la découpe d'objet localisée (1a, 1b).
